## Europäisches Patentamt
## European Patent Office
## Office européen des brevets

(19)

(11) Numéro de publication: **0 226 500 B1**

(12) **FASCICULE DE BREVET EUROPEEN**

(45) Date de publication du fascicule du brevet:
**18.10.89**

(51) Int. Cl.⁴: **C04B 26/06**

(21) Numéro de dépôt: **86402574.7**

(22) Date de dépôt: **20.11.86**

(54) Fluidifiant pour mortiers à base de liants organiques et mortiers ainsi obtenus.

(30) Priorité: **22.11.85 FR 8517327**

(43) Date de publication de la demande:
**24.06.87 Bulletin 87/26**

(45) Mention de la délivrance du brevet:
**18.10.89 Bulletin 89/42**

(84) Etats contractants désignés:
**AT BE CH DE ES GB GR IT LI LU NL SE**

(56) Documents cités:
**EP-A- 0 067 690**
**FR-A- 1 359 009**
**FR-A- 2 389 645**
**GB-A- 870 191**
**US-A- 3 637 559**

(73) Titulaire: **NORSOLOR S.A., Tour Aurore Place des Reflets, F-92080 Paris la Défense Cédex 5(FR)**

(72) Inventeur: **Barbier, Yves, 911, rue Basse, F-60700 Pontpoint(FR)**
Inventeur: **La Pairy, Jean-Claude, 114, Route de Pontoise, F-60000 Beauvais(FR)**
Inventeur: **Perrin, Christian, 4, rue de l'Aviation, F-78500 Sartrouville(FR)**

(74) Mandataire: **Rieux, Michel, c/o NORSOLOR Service Propriété Industrielle B.P. 57, F-62670 Mazingarbe(FR)**

**Description**

La présente invention concerne un fluidifiant pour mortiers à base de charges minérales et de résines (méth)acryliques.

L'utilisation des résines (méth)acryliques dans l'agglomération des charges minérales est actuellement bien connue. Les précurseurs monomères de ces résines (méth)acryliques constituent un bon fluidifiant des charges minérales. De plus, ces résines sont intéressantes en raison, notamment de leur bonne tenue au vieillissement, de leur transparence et de leur souplesse, et de la facilité avec laquelle les mortiers comprenant ces résines peuvent être préparés. D'autre part, la vitesse de polymérisation de ces résines facilite leur utilisation dans les mortiers.

Le problème qui se pose au développement des résines (méth) acryliques réside dans leur prix de revient élevé, problème d'autant plus important que la quantité nécessaire de résines (méth)acryliques pour bénéficier d'une fluidité suffisante pour une coulée fiable du mortier est importante, et comprise généralement entre 18 et 50 % en poids par rapport au mortier.

Un autre problème, qui découle du précédent, résulte du fait que la résine (méth)acrylique est introduite en grande partie à l'état de monomères dans la charge minérale. Lors de la polymérisation, on constate un phénomène de retrait qui est, bien entendu, d'autant plus important que la quantité de monomères est également importante.

Une solution connue pour limiter la quantité de résines (méth)acryliques dans le mortier consiste à introduire des charges minérales possédant une courbe granulométrique différente et complémentaire afin que les intervalles entre les grains les plus gros soient remplis. Dans ce cas, on est alors obligé de travailler avec des mortiers les plus secs possibles, qui seront ensuite pressés et vibrés pour épouser, plus ou moins fidèlement, la forme du moule qui devra être renforcé.

Une autre solution consiste à introduire dans le mortier des fluidifiants mécaniques ou chimiques, mais leur prix de revient est le plus souvent plus important que l'économie relative qu'ils font réaliser sur la quantité de résines (méth)acryliques.

EP-A 67 690 décrit un additif pour mortier comprenant du méthacrylate d'éthyle, du méthacrylate de butyle et de l'acide méthacrylique avec un rapport en poids de 59/39/2.

GB-A 870 191 divulgue des limiteurs de chaînes pour la polymérisation de méthylacrylate de méthyle tels que des mercaptans.

Selon FR-A 2 389 645 on connait des additifs pour mortier comprenant un copolymère d'acide acrylique et de méthacrylate de méthyle ayant un rapport en poids d'environ 2/95 et du n-dodécylmercaptan.

La présente invention a pour but de résoudre les problèmes indiqués ci-dessus, et de permettre la préparation de mortier parfaitement fluide avec une quantité faible de résines (méth) acryliques.

Plus précisément, l'invention a pour premier objet un fluidifiant pour mortiers comprenant essentiellement des charges minérales et un liant à base de résine (méth)acrylique, caractérisé en ce qu'il comprend au moins un copolymère d'acide (méth)acrylique et d'au moins un (méth)acrylate d'alkyle en solution dans un milieu limiteur de chaînes, le rapport en poids de l'acide (méth)acrylique au (méth)acrylate d'alkyle dans ledit copolymère étant compris entre 10/90 et 50/50 et en ce que le poids moléculaire moyen en poids dudit copolymère est compris entre 5 000 et 75 000. Dans la plupart des cas, il est préférable que la proportion en poids dudit copolymère dans le fluidifiant soit comprise entre 15 et 80 %.

Comme précisé ci-dessus, le copolymère qui est le constituant principal du fluidifiant selon l'invention, a un poids moléculaire moyen en poids compris entre 5 000 et 75 000, et de préférence entre 5 000 et 50 000. On obtient de tels poids moléculaires notamment en utilisant des proportions en poids d'acide (méth)acrylique et de (méth)acrylate d'alkyle comprise entre 10/90 et 50/50. En dehors de ces proportions, c'est-à-dire dans le cas où l'on utilise une quantité d'acide (méth)acrylique supérieure à celle de (méth)acrylate d'alkyle, on obtient un copolymère de poids moléculaire moyen élévé en permettant pas de préparer un fluidifiant satisfaisant.

Parmi les copolymères utilisables dans le fluidifiant selon l'invention, on peut citer notamment les copolymères suivants : acide (méth)acrylique/(méth)acrylate d'éthyle, acide (méth)acrylique/(méth)acrylate de butyle, acide (meth)acrylique/(méth)acrylate d'éthyle-2-hexyle, et les terpolymères suivants : acide (méth)acrylique/(méth)acrylate d'éthyle/(méth)acrylate d'éthyle-2-hexyle.

Les charges minérales concernées par la présente invention sont extrêmement diverses. On peut citer notamment la silice, les carbonates, l'alumine, l'oxyde de titane, le verre.

Parmi les résines (méth)acryliques utilisables dans la présente invention, on peut citer les résines à base de (méth)acrylates d'alkyle dont le groupe alkyle a de 1 à 20 atomes de carbone, par exemple à base de (méth)acrylates de méthyle.

Le préparation du fluidifiant selon l'invention est effectuée par polymérisation en solution d'un acide (méth)acrylique et d'au moins un (méth)acrylate d'alkyle. Comme précisé auparavant, la copolymérisation est réalisée dans un milieu limiteur de chaînes afin que le poids moléculaire moyen en poids du polymère soit compris entre 5 000 et 75 000. Pour ce faire, cette polymérisation est réalisée :
- soit, dans au moins un solvant quelconque, par exemple dans le benzène ou le toluène, en présence d'au moins un limiteur de chaînes de type mercaptan,
- soit, dans au moins un solvant favorisant les transferts de chaînes, tel qu'un alcool mono- ou polyfonctionnel, et le cas échéant en présence d'un limiteur de chaînes de type mercaptan.

Cette copolymérisation est le plus souvent effectuée à des températures comprises entre 40 et 160°C, étant bien entendu que cette température doit être inférieure à la température d'ébullition du solvant utilisé.

Le fluidifiant selon l'invention peut en outre comprendre un autre fluidifiant connu, chimique ou mécanique, par exemple des microbilles de verre, à raison de 1 à 10% en poids.

Le fluidifiant selon l'invention peut être utilisé dans la proportion de 1 à 10 % en poids de résine (méth)acrylique liante.

Un second objet de la présente invention consiste en un mortier, qui comprend essentiellement des charges minérales, au moins une résine (méth)acrylique, au moins un fluidifiant tel que décrit précédemment et au moins un système de catalyse capable de provoquer la polymérisation de la résine (méth)acrylique liante.

Le fluidifiant selon l'invention peut être introduit dans la résine (méth)acrylique liante avant l'ajout de cette dernière dans la charge minérale. Les précurseurs de la résine (méth)acrylique liante sont alors principalement à l'état de monomères. Le fluidifiant peut également être introduit directement dans le mélange composé de charges minérales et de résines (méth)acryliques liantes.

Grâce à l'invention, il a été possible de diminuer la quantité de résine (méth)acrylique liante de 30 à 50 %, sans rien changer à la constitution des charges et à viscosité constante. Auparavant on utilisait 35 à 13 % en poids de résines (méth)acryliques liantes par rapport aux charges minérales, l'addition du fluidifiant selon l'invention dans le mortier a permis de ramener ces valeurs à 13 et 6 %.

Les exemples donnés ci-dessous à titre indicatif permettront de mieux comprendre l'invention. Dans ces différents exemples, on désignera par charge minérale 1 la charge minérale composée de 80% en poids de silice et de 20% en poids de carbonate, et par charge minérale 2 la charge minérale composée de 60% en poids de silice et de 40% en poids de carbonate.

## EXEMPLE 1

Dans une résine méthacrylique comprenant:

| – méthacrylate de méthyle: | 90 parties (en poids), |
| – polyméthacrylate de méthyle: | 10 parties, |
| – diméthylparatoluidine: | 1 partie, |

on ajoute 4 parties d'un fluidifiant qui est un copolymère d'acide acrylique/d'acrylate d'éthyle en solution dans l'éthanol. La préparation de ce fluidifiant a nécessité de:

| – l'éthanol: | 60 parties (en poids), |
| – l'acide acrylique: | 20 parties, |
| – l'acrylate d'éthyle: | 20 parties, |
| – un mercaptan: | 1 partie. |
| – azoisobutyronitrile: | 0,2 partie |
| – peroxydicarbonate: | 0,2 partie |

Après polymérisation en solution à 76°C, on obtient un copolymère de poids moléculaire moyen en poids égal à 17000.

La résine méthacrylique, décrite ci-dessus et dans laquelle le fluidifiant est incorporé, est introduite et mélangée avec la charge minérale 1. La résine méthacrylique est introduite à raison de 10% en poids par rapport aux charges minérales, ce qui représente une diminution de 30 % de la quantité de résine liante utilisée dans ce cas.

Quand le mortier est parfaitement fluide et homogène, on peut ajouter le catalyseur de polymérisation de la résine méthacrylique. Dans cet exemple, il s'agit du peroxyde de benzoyle, ajouté à raison de 3 parties dans la résine méthacrylique.

EP 0 226 500 B1

## EXEMPLE 2

Dans une résine méthacrylique composée de:

| — méthacrylate de méthyle: | 100 parties (en poids), |
|---|---|
| — diméthylparatoluidine: | 1 partie |

on ajoute 2 parties (en poids) d'un fluidifiant qui est un copolymère d'acide acrylique et d'acrylate d'éthyle en solution dans l'éthanol.
La préparation de ce fluidifiant a nécessité de:

| — méthacrylate de méthyle: | 100 parties (en poids), |
|---|---|
| — diméthylparatoluidine: | 1 partie |

La copolymérisation est effectuée à 76°C. Le copolymère obtenu possède un poids moléculaire moyen en poids de 15 000.
En ajoutant 11 parties (en poids) du liant décrit ci-dessus (résine méthacrylique + fluidifiant) dans 100 parties (en poids) de charge minérale 1, on obtient un mortier parfaitement fluide. On peut alors introduire le catalyseur dans le mortier pour démarrer la polymérisation. Dans cet exemple, il s'agit du peroxyde de benzoyle qui est utilisé à raison de 3% en poids par rapport au liant.

## EXEMPLE 3

Cet exemple diffère de l'exemple 2 uniquement par la quantité de fluidifiant introduite dans la résine méthacrylique liante. On ajoute 5% (en poids) de fluidifiant par rapport au liant. L'addition de 8,5 parties (en poids) de ce liant (résine méthacrylique + fluidifiant) suffit pour préparer un mortier parfaitement fluide.

## EXEMPLE 4.

Pour la préparation d'un liant destiné à l'agglomération de charges minérales, on ajoute, dans une résine méthacrylique semblable à celle décrite dans l'exemple 2, 3 parties (en poids) d'un fluidifiant de composition suivante:

| — éthanol: | 50 parties, |
|---|---|
| — copolymère d'acide acrylique/ acrylate d'éthyle-2-hexyle (10/40): | 50 parties, |
| — dodécylmercaptan: | 0,5 partie, |
| — azoisobutyronitrile: | 0,5 partie, |
| — peroxydicarbonate: | 0,5 partie, |
| — éther méthylique d'hydroquinone: | 500 ppm |

La préparation de ce fluidifiant est effectuée à 78°C. Le poids moléculaire moyen en poids du copolymère obtenu est égal à 15000.
L'addition de 10 parties (en poids) du liant réalisé dans cet exemple dans 100 parties (en poids) de charge minérale 1 donne un mortier parfaitement fluide. La polymérisation du liant est déclenchée à l'aide de l'addition de 3% en poids du péroxyde de benzoyle par rapport au liant.

## EXEMPLE 5

Pour la préparation du liant, on procède comme dans l'exemple 4, excepté que le copolymère utilisé est un copolymère (10/40) d'acide acrylique et d'acrylate de butyle. Le poids moléculaire moyen en poids de ce copolymère est égal à 13500.
L'addition de 10 parties (en poids) de ce liant dans 100 parties (en poids) de charge minérale 1 donne un mortier très fluide. Pour déclencher la polymérisation, il suffit de procéder comme indiqué dans l'exemple 4.

## EXEMPLE 6

Pour la préparation d'un liant, on procède comme dans l'exemple 4, excepté que le "copolymère" utilisé est un terpolymère d'acide acrylique, d'acrylate d'éthyle et d'acrylate d'éthyle-2-hexyle dans la proportion en poids 10/20/20. Le poids moléculaire moyen en poids de ce copolymère est égal à 15000.

L'addition de 10 parties (en poids) de ce liant dans 100 parties (en poids) de charge minérale 1 donne un mortier très fluide. La polymérisation du liant est déclenchée dans les mêmes conditions que celles de l'exemple 4.

## EXEMPLE 7

Pour la préparation d'un liant, on ajoute dans une résine méthacrylique semblable à celle décrite dans l'exemple 2, 3 parties (en poids) d'un fluidifiant composé de:

| | |
|---|---|
| – alcool benzylique: | 50 parties, |
| – copolymère (20/80) d'acide acrylique et de méthacrylate de butyle: | 50 parties, |
| – azoisobutyronitrile: | 0,05 partie. |

La préparation de ce fluidifiant est réalisée à 160°C. Le poids moléculaire moyen en poids du copolymère est égal à 6 100.

L'addition de 10 parties (en poids) de ce liant dans 100 parties (en poids) de charge minérale 1 donne un mortier très fluide. La polymérisation du liant est déclenchée dans les mêmes conditions que celles décrites dans l'exemple 4.

## EXEMPLE 8 (comparatif)

On prépare le liant de composition suivante:

| | |
|---|---|
| – méthacrylate de méthyle: | 100 parties (en poids), |
| – diméthylparatoluidine: | 1 partie |

La préparation d'un mortier parfaitement fluide avec ce liant et la charge minérale 1 nécessite l'utilisation de 17 parties (en poids) de liant dans 100 parties (en poids) de charge 1.

## EXEMPLE 9

Dans une résine méthacrylique composée de:

| | |
|---|---|
| – méthacrylate de méthyle: | 100 parties (en poids) |
| – diméthylparatoluidine: | 1 partie |

on ajoute 5% en poids d'un fluidifiant qui est un copolymère d'acide acrylique et d'acrylate d'éthyle en solution dans l'éthanol.

La préparation de ce fluidifiant à nécessité 30 parties (en poids) d'éthanol et 70 parties (en poids) d'une composition constituée de:

| | |
|---|---|
| – acide acrylique: | 20 parties (en poids) |
| – acrylate d'éthyle: | 80 parties |
| – dodecylmercaptan: | 2 parties |
| – azoisobutyronitrile: | 0,2 partie |
| – peroxydicarbonate: | 0,2 partie |

La copolymérisation est effectuée à 78°C. Le copolymère obtenu possède un poids moléculaire moyen en poids de 15000.

L'addition de 8,5% en poids de liant (résine méthacrylique + fluidifiant) par rapport à la charge minérale 1 suffit pour donner un mortier parfaitement fluide.

La polymérisation du liant est déclenchée par l'addition de 3% en poids de peroxydicarbonate.

## EXEMPLE 10

Pour réaliser un mortier avec la charge minérale 2, on utilise une résine méthacrylique composée de 100 parties de méthacrylate de méthyle et de 1 partie de diméthylparatoluidine, et, selon le cas, une certaine quantité de fluidifiant décrit dans l'exemple 2. Les résultats indiquant la quantité de liant (résine méthacrylique + fluidifiant) nécessaire pour obtenir un mortier fluide sont annexées dans le tableau ci-dessous

| % en poids de fluidifiant dans le liant | 0 | 3 | 5 |
|---|---|---|---|
| % en poids de liant dans le mortier | 23 | 11,5 | 9 |

## EXEMPLE 11

Pour préparer un mortier avec la charge minérale 2, on utilise une résine méthacrylique composée de 100 parties de méthacrylate de méthyle et de 1 partie de diméthylparatoluidine, et selon le cas, le fluidifiant suivant préparé à partir de:

| | |
|---|---|
| – acide méthacrylique: | 10 parties (en poids) |
| – acrylate d'éthyle: | 40 parties |
| – éthanol: | 50 parties |
| – dodécylmercaptan: | 1 partie |
| – azoisobutyronitrile: | 0,1 partie |
| – bis(4-tertiobutylcyclohexyl)-peroxydicarbonate: | 0,1 partie |

La copolymérisation est effectuée à 78°C. Le copolymère obtenu possède un poids moléculaire moyen en poids de 12500.

Les résultats indiquant la quantité de liant nécessaire à l'obtention d'un mortier fluide sont annexés dans le tableau suivant :

| % en poids de fluidifiant dans le liant | 0 | 3 | 5 |
|---|---|---|---|
| % en poids de liant dans le mortier préparé avec la charge 2 | 23 | 12,5 | 10,5 |

## EXEMPLE 12

On répète les tests effectués dans l'exemple 11 avec le fluidifiant suivant, préparé à partir de:

| | |
|---|---|
| – acide méthacrylique: | 10 parties (en poids) |
| – méthacrylate de butyle: | 40 parties |
| – éthanol: | 50 parties |
| – dodécylmercaptan: | 1 partie |
| – azoisobutyronitrile: | 0,1 partie |
| – bis(4-tertiobutylcyclohexylperoxy)dicarbonate: | 0,1 partie |

La copolymérisation est effectuée à 78°C. Le copolymère obtenu possède un poids moléculaire moyen en poids de 17000.

Les résultats sont annexés dans le tableau ci-dessous:

| % en poids de fluidifiant dans le liant | 0 | 3 | 5 |
|---|---|---|---|
| % en poids de liant dans le mortier préparé avec la charge 2 | 23 | 14,5 | 12 |

6

## Revendications

1/ Fluidifiant pour mortier, caractérisé en ce qu'il comprend au moins un copolymère d'acide (méth)acrylique et d'au moins un (méth)acrylate d'alkyle en solution dans un milieu limiteur de chaînes, le rapport en poids de l'acide (méth)acrylique au (méth)acrylate d'alkyle dans ledit copolymère étant compris entre 10/90 et 50/50, et en ce que le poids moléculaire moyen en poids dudit copolymère est compris entre 5 000 et 75 000.

2/ Fluidifiant selon la revendication 1, caractérisé en ce que le milieu limiteur de chaîne dans lequel se trouve le copolymère est composé d'un solvant quelconque dudit copolymère et d'un composé limiteur de chaînes du type mercaptan.

3/ Fluidifiant selon la revendication 1, caractérisé en ce que le milieu limiteur de chaîne dans lequel se trouve le copolymère comprend au moins un solvant favorisant les transferts de chaînes.

4/ Fluidifiant selon la revendication 3, caractérisé en ce que le milieu limiteur de chaîne dans lequel se trouve le copolymère comprend en outre un composé limiteur de chaînes du type mercaptan.

5/ Fluidifiant selon la revendication 3 ou 4, caractérisé en ce que le solvant favorisant les transferts de chaîne est un alcool mono- ou polyfonctionnel.

6/ Fluidifiant selon l'une quelconque des revendications 1 à 5, caractérisé en ce qu'il comprend en outre un autre fluidifiant connu, chimique ou mécanique, à raison de 1 à 10% en poids.

7/ Mortier comprenant des charges minérales, au moins une résine (méth)acrylique liante, au moins un système de catalyse capable de provoquer la polymérisation de ladite résine et au moins un fluidifiant, caractérisé en ce que ledit fluidifiant est conforme à l'une des revendications 1 à 6.

8/ Mortier selon la revendication 7, caractérisé en ce que le fluidifiant est présent dans la proportion de 1 à 10 % en poids de la résine (méth)acrylique liante.

9/ Mortier selon l'une des revendications 7 ou 8, caractérisé en ce que la résine (méth)acrylique liante est un polymère de (méth)acrylate d'alkyle dont le groupe alkyle a de 1 à 20 atomes de carbone.

## Patentansprüche

1. Verflüssiger für Mörtel, dadurch gekennzeichnet, daß er mindestens ein Copolymer von (Meth)arcylsäure und mindestens einem Alkyl(meth)acrylat in Lösung in einem Kettenbegrenzermilieu enthält, wobei das Gewichtsverhältnis der (Meth)acrylsäure zum Alkyl(meth)acrylat in dem genannten Copoylmer zwischen 10/90 und 50/50 beträgt, und daß das im Gewicht ausgedrückte mittlere Molgewicht des genannten Copolymers zwischen 5000 und 75000 beträgt.

2. Verflüssiger nach Anspruch 1, dadurch gekennzeichnet, daß das Kettenbegrenzermilieu, in dem sich das Copolymer befindet, aus irgendeinem Lösungsmittel für das Copolymer und einer Kettenbegrenzer-Verbindung des Mercaptan-Typs besteht.

3. Verflüssiger nach Anspruch 1, dadurch gekennzeichnet, daß das Kettenbegrenzermilieu, in dem sich das Copolymer befindet, mindestens ein die Kettenübertragungen begünstigendes Lösungsmittel enthält.

4. Verflüssiger nach Anspruch 3, dadurch gekennzeichnet, daß das Kettenbegrenzermilieu, in dem sich das Copolymer befindet, weiters eine Kettenbegrenzer-Verbindung des Mercaptan-Typs enthält.

5. Verflüssiger nach Anspruch 3 oder 4, dadurch gekennzeichnet, daß das die Kettenübertragungen begünstigende Lösungsmittel ein mono- oder polyfunktioneller Alkohol ist.

6. Verflüssiger nach irgendeinem der Ansprüche 1 bis 5, dadurch gekennzeichnet, daß er weiters einen anderen bekannten chemischen oder mechanischen Verflüssiger in einer Menge von 1 bis 10 Gew.-% enthält.

7. Mörtel, enthaltend mineralische Füllstoffe, mindestens ein (Meth)arcyl-Bindeharz, mindestens ein Katalysatorsystem, das die Polymerisation des genannten Harzes hervorrufen kann, und mindestens einen Verflüssiger, dadurch gekennzeichnet, daß der genannte Verflüssiger einem Verflüssiger der Ansprüche 1 bis 6 entspricht.

8. Mörtel nach Anspruch 7, dadurch gekennzeichnet, daß der Verflüssiger in einem Prozentsatz von 1 bis 10 Gew.-% bezogen auf das (Meth)arcyl-Bindeharz vorliegt.

9. Mörtel nach Anspruch 7 oder 8, dadurch gekennzeichnet, daß das (Meth)acryl-Bindeharz ein Polymer von Alkyl(meth)acrylat ist, dessen Alkylgruppe 1 bis 20 Kohlenstoffatome enthält.

## Claims

1. Plasticizer for mortar, characterized in that it comprises at least one copolymer of (meth)acrylic acid and of at least one alkyl (meth)acrylate in solution in a chain stopper medium, the weight ratio of (meth)acrylic acid to the alkyl (meth)acrylate in the said copolymer being between 10/90 and 50/50, and in that the average molecular weight of the said copolymer is between 5,000 and 75,000.

2. Plasticizer according to claim 1, characterized in that the chain stopper medium in which the copolymer is to be found is made up of any solvent for the said copoylmer and of a chain stopper compound of the mercaptan type.

3. Plasticizer according to claim 1, characterized in that the chain stopper medium in which the copolymer is to be found comprises at least one solvent promoting chain transfers.

4. Plasticizer according to claim 3, characterized in that the chain stopper medium in which the copolymer is to be found additionally comprises a chain stopper compound of the mercaptan type.

5. Plasticizer according to claim 3 or 4, characterized in that the solvent promoting chain transfers is a mono- or polyfunctional alcohol.

6. Plasticizer according to any one of claims 1 to 5, characterized in that it additionally comprises another known plasticizer, chemical or mechanical, in a proportion of 1 to 10% by weight.

7. Mortar comprising inorganic fillers, at least one (meth)acrylic binding resin, at least one catalyst system capable of causing the polymerization of the said resin and at least one plasticizer, characterized in that the said plasticizer is in accordance with one of claims 1 to 6.

8. Mortar according to claim 7, characterized in that the plasticizer is present in the proportion of 1 to 10% by weight of the (meth)acrylic binding resin.

9. Mortar according to either of claims 7 and 8, characterized in that the (meth)acrylic binding resin is an alkyl (meth)acrylate polymer in which the alkyl group contains from 1 to 20 carbon atoms.